# EUROPÄISCHE PATENTSCHRIFT

(11) **EP 0 262 423 B1**
(45) Veröffentlichungstag und Bekanntmachung des Hinweises auf die Patenterteilung: **24.02.1993**
(21) Anmeldenummer: 87112700.7
(22) Anmeldetag: 01.09.1987
(51) Int. Cl.: C08J 9/36, C08L 75/04

(54) **Verfahren zum Herstellen von Formkörpern aus wärmestandfestem Polyurethan-Integralschaum**
Process for producing shaped articles of heat-stable integral polyurethane foam
Procédé de fabrication d'objets conformés de mousses intégrées de polyuréthanes stables à la chaleur

(30) Priorität: 04.09.1986 DE 3630104; 12.05.1987 DE 3715718
(43) Veröffentlichungstag der Anmeldung: 06.04.1988
(73) Patentinhaber: PHOENIX AKTIENGESELLSCHAFT, 21079 Hamburg (DE)
(72) Erfinder: Timm, Dr. Thies, Dipl.-Chem., 2100 Hamburg 90 (DE); Schaper, Dr. Herbert, Dipl.-Chem., 2000 Hamburg 13 (DE); Krässig, Dr. Reinhard, Dipl.-Chem., 2105 Seevetal 2 (DE)

(56) Entgegenhaltungen:
- EP-A- 0 069 286
- DE-A- 2 819 037
- DE-A- 3 226 818
- GB-A- 2 069 514
- JOURNAL OF CELLULAR PLASTICS, Band 13, Juli/August 1977, Seiten 255-260; R.L. McBRAYER et al.: "Processing and properties of a microcellular foam system with low sensitivity to temperature"

## Beschreibung

Die Erfindung betrifft ein Verfahren zum Herstellen von Formkörpern gemäß Oberbegriff des Anspruchs 1.

Bezüglich der Herstellung dieser Formkörper aus segmentiertem Polyurethan (Polyurethan-Integralschaum) gibt es zahlreiche veröffentlichte Arbeiten, wobei nun einige Entwicklungsarbeiten auf diesem Gebiet im Rahmen einer Übersicht aufgeführt werden.

| | |
|---|---|
| DE-A-24 61 521 | DE-C-26 12 896 |
| DE-A-27 14 518 | DE-C-28 19 037 |
| DE-A-27 18 173 | DE-C-32 26 818 |
| DE-A-29 22 769 | EP-A-0 069 286 |

Vernetzte und unvernetzte segmentierte Polyurethane unterschiedlichen Aufbaus sind als Werkstoffe mit Elastomercharakter in einem weitgefächerten Härtebereich (ca. 60 Shore A bis 60 Shore D) darstellbar. Ihre vielfältigen Einsatzgebiete als Massiv- oder Integralschaum-Formteile sind hinlänglich bekannt (S.Z.B. Kunststoffhandbuch, Herausgeber G.W. Becker/D. Braun, Bd. 7: Polyurethane, Herausgeber G. Oertel).

Gleichfalls als bekannt vorausgesetzt werden kann das herausragende Eigenschaftsbild dieser Werkstoffgruppe, das seine Einsetzbarkeit als Konstruktionsmaterial ermöglicht.

Das hohe Eigenschaftsniveau von segmentierten Polyurethanen beruht zu einem wesentlichen Teil auf deren Multiphasenstruktur. Bei der Reaktion der Diisocyanate mit lang- und kurzkettigen mehrfunktionellen Verbindungen bilden sich Block- oder Segmentcopolymere mit flexiblen, weichen Sequenzen und solchen starrer, harter Gerüststruktur. Sie sind in aller Regel nicht miteinander verträglich, so daß es zur Phasentrennung der Weich- und Hartkomponente kommt. Im allgemeinen bildet die Weichphase die kontinuierliche Phase, also die Matrix, während die Hartphase die dispergierte Phase darstellt. Erst bei sehr hohen Konzentrationen an Hartsegmenten in den Gerüstketten beobachtet man Phasenumkehr. Dann allerdings verlieren die Polyurethane auch ihren Elastomercharakter. Typische Weichphasenbilder sind die Umsetzungsprodukte von Diisocyanaten, beispielsweise mit "Makrodiolen", wie lineare Polyether- oder Polyesterdiole. Hartphasenbildner sind z. B. die Umsetzungsprodukte von Diisocyanaten mit "Mikrodiolen bzw. -diaminen", wie Butandiol, Ethandiol oder bzw. alkylsubstituierten Arylendiaminen. Diese niedermolekularen Reaktionskomponenten werden auch als "Kettenverlängerer" bezeichnet. Bekanntlich kann durch Variation der molaren Konzentration der Reaktanten Härte und Vernetzungsgrad des Polyurethans in weiten Grenzen variiert werden.

Für eine Phasenseparation der Weich- und Hartsegmente ist offensichtlich unter gegebenen Reaktionsbedingungen ein Unterschied in der Polarität der zugrundeliegenden Struktureinheiten günstig; jedoch sind hier Grenzen gesetzt, weil bei einer zu extremen Affinitätsdifferenz sehr grobe, heterogene "Gefügestrukturen" entstehen können (Beispiel: Systeme mit Polybutadiendiolen als Makrodiol), die das mechanisch-technologische Eigenschaftsbild des Endproduktes ggf. negativ beeinflussen.

Eine Erhöhung des Vernetzungsgrades ist zwar für die Heraufsetzung des Fließerweichungspunktes vorteilhaft, andererseits erschweren aber die chemischen Querverbindungen die Ausbildung einer optimalen Phasenstruktur. Es ist also in diesem Sinne von Bedeutung, von einem geeigneten Reaktionssystem auszugehen. Dies ist jedoch nicht Gegenstand der vorliegenden Erfindung. Diesbezüglich wird auf die eingangs erwähnten Druckschriften verwiesen.

Die bei der Polyol-Isocyanat-Reaktion entstehenden Polyurethane haben aufgrund der im allgemeinen sehr schnell ablaufenden Reaktion, z. B. im sogenannten RIM-Verfahren, keine genügende Zeit, in geordneter Weise zu kristallisieren. Es entsteht ein Gemisch von amorphen und teilkristallinen, ungeordneten Molekularbereichen. Daraus resultiert bisher eine mittlere Beständigkeit gegenüber Wärmeeinfluß. Bei den normalen RIM-Qualitäten entstehen schon bei 120°C irreversible Verformungen, wenn beispielsweise Karosserieteile aus diesem Material nicht genügend gut unterstützt werden. Schon das Eigengewicht genügt dann zur Ausbildung von Einfallstellen oder Abzeichnungen.

Aus der EP-A-0 069 286 und der Druckschrift "Journal of Cellular Plastics, Band 13, 255 - 260 (1977)" ist bekannt, wie durch anschließendes Tempern die Wärmestandfestigkeit derartiger Formkörper verbessert wird, wobei nun auf das Problem des Temperns näher eingegangen wird.

Bei der Herstellung von Integral-Schaumteilen auf Polyurethanbasis, insbesondere von voluminösen Großteilen, wie sie für Außenverkleidungen im KFZ-Heck, -Bug und Seitenbereichen als Schutzteile, Energieabsorber (Bumper) oder Spoiler verwendet werden, ist die Ausbildung optimaler Gefügestrukturen besonders durch die applizierte Verfahrenstechnik erschwert. Der RIM-(Reaction Injection Moulding)-Prozeß injiziert die Reaktionskomponenten mit hohen Geschwindigkeiten in die Form. Das Reaktionsgemisch ist wegen der ökonomisch notwendigen kurzen Zykluszeiten hochreaktiv. Beide Verfahrensparameter bewirken zusammen eine hohe Fließgeschwindigkeit bei schneller Verfestigung des Materialstroms. Turbulenzen sind insbesondere in kompliziert geformten Teilen unvermeidlich. Insgesamt sind somit die Bedingungen für eine weitgehende Phasenseparation und ein Phasenwachstum der Hartsegmente denkbar ungünstig. Temperprozesse im Zug der Fertigung und nach der Entformung der Teile sind daher zwangsläufig ein Erfordernis für die Entwicklung einer genügend wärmestandfesten Phasenmorphologie. Jedoch sind Temperprozesse im Produktionsablauf, an welcher Stelle auch immer, ein nicht zu vernachlässigender Kostenfaktor, denn sie verursachen Zeitverluste und erfordern einen höheren Energieeinsatz und Investitionen im nicht unbeträchtlichen Ausmaß.

Bei Großteilen ist zudem der Wärmetransport in das Materialinnere infolge der geringen Wärmeleitfähigkeit der Werkstoffe ein recht langsamer Vorgang, so daß die Temperzeiten und/oder Temperaturen auf Kosten der Wirtschaftlichkeit der Herstellungsverfahren verlängert bzw. erhöht werden müssen, wobei eine homogene Gefügeausbildung kaum erreichbar sein wird, es sei denn, man könnte die Mikrowellen-Erwärmung realisieren.

Unter diesem Aspekt ist eine modifizierte Verfahrensvariante anzustreben, wobei die Zusatzmaßnahme darin besteht, daß man Nukleierungsmittel verwendet, die als Keimbildner die Ausbildung und das Wachstum der Hartsegmentstrukturen im Polymergefüge beschleunigen. Durch den Einsatz von Nukleierungsmitteln wird die Wärmestandfestigkeit der Formkörper verbessert. Ob zwecks weiterer Verbesserung der Wärmestandfestigkeit eine zusätzliche thermische Nachbehandlung erfolgen muß, ist abhängig von der Polyurethanqualität, der Art der Nukleierungsmittel, dem Verwendungszweck des Formkörpers und seines Anforderungsprofils im Hinblick auf Wärmestandfestigkeit sowie abhängig von wirtschaftlichen Gesichtspunkten.

Die Keimbildungsgeschwindigkeit ist stark temperaturabhängig. Bei einer bestimmten Temperatur durchläuft sie (stoffabhängig) ein Maximum. Bei tiefen Temperaturen ist zwar die Keimbildung energetisch begünstig, doch wird - gegenläufig - mit abnehmender Temperatur wegen der erschwerten Diffusion der zur Keimbildung benötigten Strukturelemente deren Transport an die Grenzfläche durch die steigende Viskosität des Mediums schließlich gänzlich unterbunden.

Die Nukleierungsmittel müssen folgende Voraussetzungen erfüllen:
- Herabsetzung der Grenzflächenenergie
- Ihr Schmelzpunkt muß oberhalb der des Polymeren liegen.
- Unlöslichkeit im Polymeren
- Sie dürfen nicht flüchtig sein.
- Sie sollten mit dem Polymer nicht chemisch reagieren.

Die erfindungsgemäßen Nukleierungsmittel aus den nachfolgenden Stoffklassen, die diese Voraussetzungen erfüllen, werden in Konzentrationen von max. 5 Gew.-%, bezogen auf die effektive Substanz und die Polyolkomponente, verwendet, u.z. einzeln oder in Kombination:
a) Niedermolekulare oder oligomere Derivate des Harnstoffs bzw. Thioharnstoffs mit Schmelzpunkten > 160°C;
b) Niedermolekulare oder oligomere Verbindungen mit Urethan-, Allophanat-, Biuret oder Isocyanuratstrukturen mit Schmelzpunkten > 160°C;
c) Metallhalogenide der 1. und 2. Hauptgruppe des Periodensystems mit Schmelzpunkten > 160°C.

Die nukleierten Formkörper werden, falls erforderlich, in der Form und/oder im Anschluß an die Entformung mindestens 30 Minuten und bei Temperaturen von 110 bis 180°C, insbesondere 1 Stunde bei 160°C, thermisch nachbehandelt.

### Experimentelle Beschreibung

In einem Rührkessel wird unter Einsatz eines Rührers (z. B. Ultra-Turrax-Schnellrührer) die A-Komponente zubereitet, die Nukleierungsmittel enthält. Mit Hilfe einer Schaumdosiermaschine mit Mischkopf wird die A-Komponente mit der B-Komponente in die entsprechende Form verschäumt. Die üblichen Bedingungen (Spalte U) und die der Versuchsreihe zugrundeliegenden Bedingungen (Spalte V) sind:

| | U | V |
|---|---|---|
| Ansatztemperatur der A- und B-Komponente | 50 bis 60°C | 60°C |
| Formentemperatur | 50 bis 60°C | 60°C |
| Formenstandzeit | 3 bis 6 min | 3 min |

Bezüglich verfahrenstechnischer Einzelheiten der Zubereitung und des Verschäumens wird auf den eingangs erwähnten Stand der Technik verwiesen.

Erfolgt eine thermische Nachbehandlung (Temperung) der (nukleierten) Polyurethan-Integralschaum-Formkörper, so kann die Temperung in der Form und/oder nach der Entformung vorgenommen werden. Die der Versuchsreihe (Ziffern 3 und 4) zugrundeliegenden Ergebnisse basieren auf einer thermischen Nachbehandlung nach der Entformung. Die Formkörper werden nach der Entformung auf eine Auflage gebracht und im Temperofen im Rahmen eines dritten Verfahrensschritts thermisch nachbehandelt.

Nach Beendigung des Tempervorganges wird der Formkörper auf Raumtemperatur abgekühlt. Zur Ermittlung der Wärmestandfestigkeit wird der sogenannte Sag-Test herangezogen, der in folgender Weise durchgeführt wird: Ein Prüfstab als Probekörper von 150 mm Länge, 25 mm Breite und 3 bis 4 mm Stärke wird auf einer Unterlage fest aufgelegt und zwar so, daß 50 mm fest unterstützt werden und der Restbereich (100 mm) frei über die Unterstützungsfläche hinausragt. Gemessen wird der Betrag der Absenkung in mm am Ende des Stabes gegenüber dem Ausgangszustand nach einer Erwärmung von 1 Stunde bei 160°C. Diese Parameter liegen auch der Versuchsreihe zugrunde. Je kleiner der Sagwert (Kurzbezeichnung "sag"), um so größer ist die Wärmestandfestigkeit.

### Versuchsreihe

- Ziel:: Untersuchung des Einflusses von verschiedenen Nukleierungsmitteln N (Menge 2 Gew.-%) bei unterschiedlichen Bedingungen auf den Sagwert

| N | sag (mm)¹^{,}²⁾ | sag (mm)¹^{,}³⁾ | sag (mm)¹^{,}⁴⁾ |
|---|---|---|---|
| Diphenylharnstoff | 9,5 | 2,4 | 3,6 |
| Harnstoff | 11,8 | 3,8 | 5,6 |
| NFR 6⁵⁾ | 8,7 | 4,5 | 6,0 |
| NFR 60⁶⁾ | 8,6 | 6,3 | 7,8 |
| NAR 30⁷⁾ | 7,2 | 3,6 | 6,0 |

| | | | |
|---|---|---|---|
| 1) Probekörper in der Polyurethanqualität auf der Basis gepfropfter Polyetherdiole, modifiziertem 4,4'-Diphenylmethandiisocyanats (MDI) und Diethyl-Toluylendiamins | | | |
| 2) ohne Temperung | | | |
| 3) Soforttemperung (1 Std./160°C) | | | |
| 4) Temperung (1 Std./160°C) nach 14 tägiger Zwischenlagerung bei Raumtemperatur | | | |
| 5) NFR 6 (Farbruß der Degussa, Spezialschwarz SS 60) | | | |
| 6) NFR 60 (Farbruß der Degussa, Printex 60) | | | |
| 7) NAR 30 (Aktivruß der Degussa, N 330/HAF) | | | |

- Ergebnis:: Eine Soforttemperung ist effektiver als eine Temperung mit Zwischenlagerung. Der Nukleierungseffekt ist im Rahmen der Temperung relativ am deutlichsten bei Diphenylharnstoff, gefolgt von Aktivruß NAR 30.

## Patentansprüche

1. Verfahren zum Herstellen von Formkörpern aus Polyurethan-Integralschaum, insbesondere Klein- und Großkarosserieteile für die Automobilindustrie, wobei
- im ersten Verfahrensschritt die Polyolkomponente (A-Komponente), die Nukleierungsmittel, die als Keimbildner die Ausbildung und das Wachstum der Hartsegmentstrukturen im Polymergefüge beschleunigen, enthält, zubereitet wird;
- im zweiten Verfahrensschritt die A-Komponente mit der Isocyanatkomponente (B-Komponente) umgesetzt wird, beispielsweise nach der RIM-Methode; und
- gegebenenfalls die nukleierten Formkörper in der Form und/oder im Anschluß an die Entformung im Rahmen eines sich anschließenden dritten Verfahrensschrittes mindestens 30 Minuten und bei Temperaturen von 110 bis 180°C, insbesondere 1 Stunde bei 160°C, thermisch nachbehandelt werden;
dadurch gekennzeichnet, daß die Nukleierungsmittel aus den folgenden Stoffklassen in Konzentrationen von max. 5 Gew.-%, bezogen auf die effektive Substanz und die Polyolkomponente, verwendet werden, u.z. einzeln oder in Kombination:
a) Niedermolekulare oder oligomere Derivate des Harnstoffs bzw. Thioharnstoffs mit Schmelzpunkten > 160°C;
b) Niedermolekulare oder oligomere Verbindungen mit Urethan-, Allophanat-, Biuret- oder Isocyanuratstrukturen mit Schmelzpunkten > 160°C;
c) Metallhalogenide der 1. und 2. Hauptgruppe des Periodensystems mit Schmelzpunkten > 160°C.

## Claims

1. A process for the production of moulded components made of polyurethane integral foam, in particular small and large body components for the automobile industry, wherein
- in the first process step the polyol component (A-component), which contains nucleating agents which, as seed forming agents, accelerate the formation and growth of the hard segment structures in the polymer structure, is prepared;
- in the second process step the A-component is caused to react with the isocyanate component (B-component), for example in accordance with the RIM-method; and
- optionally the nucleated moulded components are subjected to thermal aftertreatment in the mould and/or following removal from the mould in the framework of a following, third process step for at least 30 minutes and at temperatures of 110 to 180°C, in particular for 1 hour at 160°C,
characterised in that the nucleating agents are selected from the following families in concentrations of a maximum of 5 % by weight, relative to the effective substance and the polyol component, individually or in combination:
a) low-molecular or oligomeric derivatives of urea and thiourea with melting points of > 160°C;
b) low-molecular or oligomeric compounds with urethane-, allophanate-, biuret- or isocyanurate structures with melting points of > 160°C;
c) metal halogenides of the 1st and 2nd main groups of the periodic system with melting points of > 160°C.

## Revendications

1. Procédé de fabrication de pièces moulées en mousse de polyuréthane à peau intégrée, en particulier de petites et de grosses pièces de carrosserie pour l'industrie automobile, dans lequel
- dans la première étape, le composant polyol (composant A), qui contient des agents de nucléation qui, en tant que générateurs de germes, accélèrent la formation et la croissance des structures de segments durs dans la texture de polymère, est préparé;
- dans la deuxième étape, le composant A est mis en réaction avec le composant isocyanate (composant B), par exemple suivant un procédé RIM; et
- eventuellement, les pièces moulées traitées par l'agent de nucléation sont soumises à un post-traitement thermique dans le moule et/ou à la suite du démoulage, dans le cadre d'une troisième étape subséquente, pendant 30 mn au moins à des températures de 110 à 180°C, en particulier pendant 1 h à 160°C,
caractérisé en ce qu'on utilise les agents de nucléation des catégories suivantes de substances, dans des concentrations de 5% en poids au maximum par rapport à la substance effective et au composant polyol, et cela individuellement ou en combinaison:
a) Dérivés de faible poids moléculaire ou oligomères de l'urée ou de la thio-urée, ayant des points de fusion supérieurs à 160°C;
b) Composés de faible poids moléculaire ou oligomères à structures d'uréthane, d'allophanate, de biuret ou d'isocyanurate, ayant des points de fusion supérieurs à 160°C;
c) Halogénures métalliques des groupes IA et IIA du système périodique, ayant des points de fusion supérieurs à 160°C.
